# EUROPEAN PATENT SPECIFICATION

(11) **EP 2 792 869 B1**
(45) Date of publication and mention of the grant of the patent: **04.11.2015**
(21) Application number: 11875373.0
(22) Date of filing: 18.12.2011
(51) Int. Cl.: F02C 1/05, F03G 6/00, F24J 2/07, F02C 7/08, F02C 7/24

(54) **SOLAR COLLECTOR INCLUDING A SOLAR TURBINE OR A TURBOCOMPRESSOR**
SONNENKOLLEKTOR MIT EINER SOLARTURBINE ODER EINEM TURBOVERDICHTER
CAPTEUR SOLAIRE ÉQUIPÉ D'UNE TURBINE SOLAIRE OU D'UN TURBOCOMPRESSEUR

(43) Date of publication of application: 22.10.2014
(73) Proprietor: Villarrubia Ruiz, Jonas, 28822 Coslada (Madrid) (ES)
(72) Inventor: Villarrubia Ruiz, Jonas, 28822 Coslada (Madrid) (ES)
(86) International application number: PCT/ES2011/070876
(87) International publication number: WO 2013/068607

(56) References cited:
- DE-A1- 3 504 360
- DE-A1- 3 504 360
- GB-A- 1 446 750
- US-A- 2 552 237
- US-A- 2 552 237
- US-A- 2 709 893
- US-A- 2 709 893
- US-A- 3 254 644
- US-A- 4 081 965
- US-A- 4 280 327
- US-A1- 2009 173 337
- US-A1- 2010 223 925
- US-A1- 2010 223 925
- US-A1- 2011 155 124

## Description

SOLAR COLLECTOR WITH SOLAR TURBINE OR TURBOCHARGER, a solar collector with a turbine for use and performance with airflows heated by solar radiation, produced by a parabolic concentrator or heliostats, has also been prepared the collector flow to various other solar turbine fuels. The turbine is powered by the flow of air received by a sensor with representation innovative with their radial ducts take the form of cone or funnel, which receives the sunlight or solar radiation depending, this, the power in kilowatts to achieve. Below fifteen kilowatts irradiation sensor will be preferably with parabolas area as the focus and thermal power depending on the power in kilowatts to produce, although it may rise to more kilowatts of production and parables greater diameter area, power above that ideally takes place, heating the air flow passing through the sensor that reaches the compressor and hot once receive the turbine motor, by a certain number of heliostats, where sensor, and others would be installed turbine tower. The turbine marks an advance over current by modifying its mechanical operation philosophy. In this turbine can be performed even when feeding fossil fuels, hydrogen or fuel of biological origin (for compounds of biomass) at the opposite outflow turbine motor, if so decided by the project which include the turbine of this patent, the ideal is that the flow is heated by solar radiation. The turbine and collector model, because of this patent occurs in three forms, one in which the external compressor is a compressor, and a model in which the compressor forms part of the turbine, but a confrontation with the turbine flow to the compressor motor, which operation will be detailed in the description of the drawings, the other is that the turbine is applied to the sensor is replaced by a turbocharger. In short, the joint is formed in and over an innovative solar collector configuration, the ducts are circular or square, which take a radial form with the establishment of a cone or funnel, and a turbine that despite saving philosophy of the thermodynamic cycle Brayton, breaks the order of components and includes a recuperated novel unlike any currently used. It is necessary to indicate that the turbine and the sensor, each independently, can work with other types of sensors and sensor elements with other thermodynamic that would fit for use, as indicated together or separate and independent.

Moreover, given the novelty of the sensor and its greater efficiency, lower installations from one kilowatt to 15 kilowatts, can be installed independently turbine described in this patent, and in order to lower the resulting product, you can install a turbo kit supplying the turbine that has the distinction of being highly economical and power as a novelty attached to this type of installation with the new solar collector.

### OBJECT OF THE INVENTION

The object of the invention is to improve the thermodynamic efficiency in the energy performance of the elements that make up the teams to use solar radiation as the driving force, avoid water consumption in these facilities, cheaper facilities themselves without loss efficiency, with the use of the temperature leaving the gas outlet (hot air), and with part of the energy also can produce hydrogen, or get storage means salts or oils, or high temperature fluids for use in different means to produce cold, or steam for a steam turbine advantage in the hours without solar radiation, as indicated by the inventor in his invention in the Spanish record in February 2006: U200600388, and in Europe, 07381002 - 0-1267 based on the priority of the previous night by feeding or other fuel.

As an important part of this patent, the object is to get the stick to avoid contamination and the production of electricity through renewable energy consumption

### BACKGROUND OF THE INVENTION

As background to this invention is indicated several technologies already, all too familiar, as can be: gas turbines, steam turbines, the heliostats and the sensors used for different projects for solar thermal, steam and turbochargers. Parabolas are known for different deposits used as transmitting or receiving radiation, either one or two focus. From all this, of all different backgrounds of the technologies described, has made significant innovations and the grouping of components to achieve a precise cluster model that can improve and differentiate into everything now, and in the opinion of the inventor of this patent: a better result.

### A TECHNICAL PROBLEM SOLVING

They are different problems to solve: Gas turbines are unique to pollute the environment by using fuels and a high cost for its enormous complexity, and within the possibilities thermodynamics gives low result energy efficiency. Also at these high temperatures is that the draft of this patent is try and get lessen their impact on the turbine motor and other components that set the turbine.

Another problem to solve is that the solar collectors are elements in this type of project, a very important base for the final result of the energy you get, because they depend on the need for a high capacity to receive the increased use of sunlight, and bring the heat to the fluid or flow that provides the mechanical, whether steam turbines, turbochargers, such as gas turbines or other items that require the exchange between solar radiation and these.

These and other problems are solved by solar collector and turbine arrangement to claim 1.

### DESCRIPTION OF THE INVENTION

The invention is mainly composed by two elements forming one, or may be used separately: turbine or turbocharger small facilities watts, and collector, these are broken down into other components that comprise the assembly. The sensor has a radial shape but their ducts are immersed, each shadow inadvertently he continues to rotate as its center leaving each conduit in view of the solar radiation and closing each other so that the hot air that is inside cone, while it is irradiated, not leave their associations; can be transparent protective screen, or not depending on its position. All the surrounding, when radiated outside the sensor is not filled ceramic material which retains the duct temperature sensor and this material a layer of thermal insulation. Depending on the installation and its composition with the turbine, the mouth of the outer part of the sensor, the portion of greater diameter, which is presented prior to irradiation, as stated, in its inlet flow can be directed an external compressor which provides air flow to the sensor conduit which is irradiated by sunlight reflected by a parabola or heliostats, and the tubes that are directed to the output, the innermost portion or tip of the cone, where encounters a straight duct, anti-turbulence with a thickness of six long duct and if necessary with fins inside to prevent rotation or tornado effect to the motor turbine inlet, corresponding to the innermost exit cone. If the set is formed with implying turbine compressor, the sensor input goes through an insulated duct to the outside, to the compressor outlet. In both cases the flow is heated by solar radiation to a greater extent on the tubes inside the cone, according enters the sensor to a temperature high at its output, flow temperature which depend on the needs of the require power in kilowatts that the turbine is installed. The sensor, in which the ducts inside are circular or square, but it can be any way by which it can receive maximum sunlight, going with the precise mechanical assembly that it can be mounted or removed the turbine. In this case explained, the radial collector cone-shaped, the fluid can be heated interior air to the turbine in question is described in this patent, or other fluids which are required to be heated by solar radiation: water, helium, etc., for feeding another kind of mechanical generators.

The turbine is divided into several components, but mainly described the most important and your description of what use and operation: On the back, low or high, since the turbine can be placed in the position required, but giving the final entry absorbing air compressor, in the case to drive installed, it is desirable to install a filter that removes impurities from air by entering the compressor, the compressed air enters an element that comprises two sides with an intermediate portion. These faces, which we will call "A" that gives the compressor and "B" which gives the outflow of the turbine motor, are perforated. The drilling of both sides, on the outside of its circumference, are connected by tubes which unite them, and that these fine tubes is where is to flow the compressed air flow provided by the compressor, but isolated portion arises where the turbine motor flow. The tubes cover the entire outer part around the circle. Just take face holes and pipes on the outside, the inside of the circle of side a facing the interior between the two sides is blind, without any communication. The B side which faces the motor and its flow turbine has a protrusion closing the communication of the ducts leading to the compressor air flow sensor turbine. After the closure face on its inner radius B has holes that communicate air from the turbine motor flow to the interior of the two sides, A and B so that the air turbine motor to eject the high temperature passes through these holes, and on your way to the exit of these gases radiate heat that contain tubes through which the air compressor to the sensor, and these tubes to said compressed air as well as heat the blind part of the A side facing the air is compressed and gives way to the compressor and to tubes passing the air to the sensor, so that the use of hot air leaving the turbine motor is intended to be the maximum. It is important to define a system of pipes Compressed air communication with the sensor, these can be any shape as long as its inner diameter and number of ducts do not obstruct the air, the materials for side A, B and pipes that ultimately all fixed or movable mechanical part must be of an alloy having high temperatures and hold very low expansion and high resistance to corrosion by mixing the components air: oxygen, etc., with alloy mechanical components. The shaft connecting the turbine and the compressor has a sealed chamber in which the exchanger through which it is composed in side A and side B. In that part of the sealing part has a fin compressor sends a certain amount of air, a calculated amount for cooling the turbine motor that receives, attracts not, that which receives the cold air compressor and internal fins dismisses the exhaust.

Regardless of the multi-piece sensor that is broken and turbine, which join four main components: compressor chamber which is joined to the intermediate heat exchanger does serve as hot gas output. The heat exchanger is attached to the turbine chamber covering motor, the motor chamber which is attached to the sensor and the latter. The kinetic motion generated by the motor moves the turbine compressor, and the same axis moves the current generator. In the case of using the turbocharger, the description using the turbine can be adapted similarly to the turbocharger.

In the event that the compressor is outside screw type or whatever, the turbine motor is directly transmitted to the generator work without intermediate compressor. In this case will the two heat exchangers to heat the working fluid, one is located at the exit of gases, and the other in communication therewith, the air inlet of the solar collector as described above, air that becoming compressor external. In all described, solar radiation sensor, may be through parabolic troughs or mirrors, as well as the installation of components: sensor, or turbocharger turbine, compressor and generator can be installed on tower or parable.

### BRIEF DESCRIPTION OF THE DRAWINGS

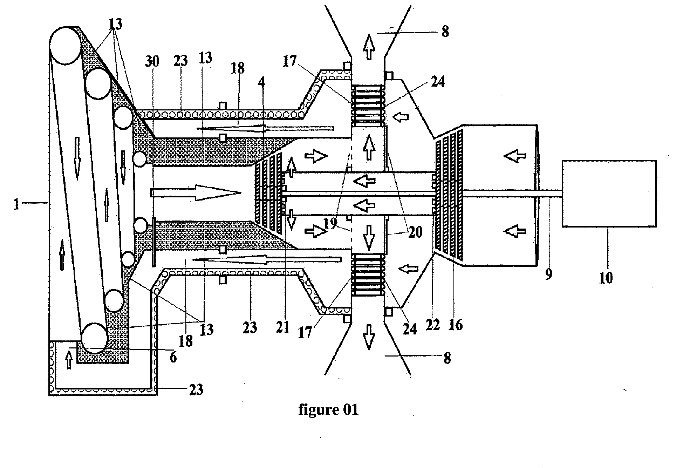

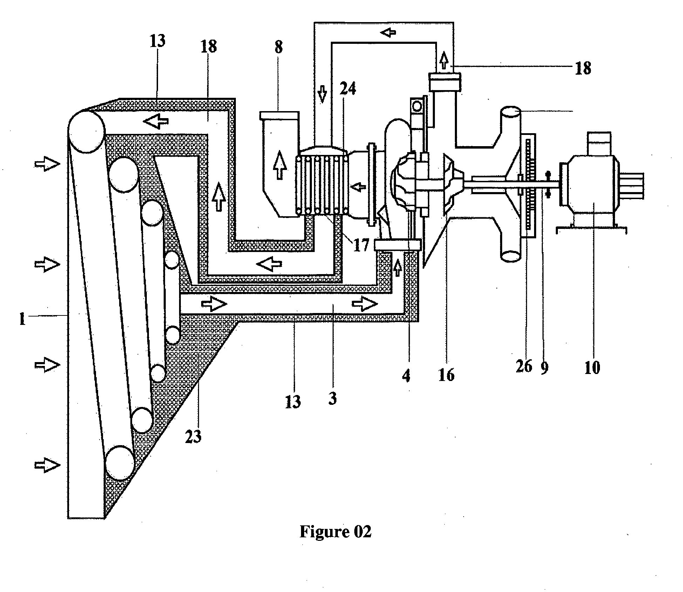

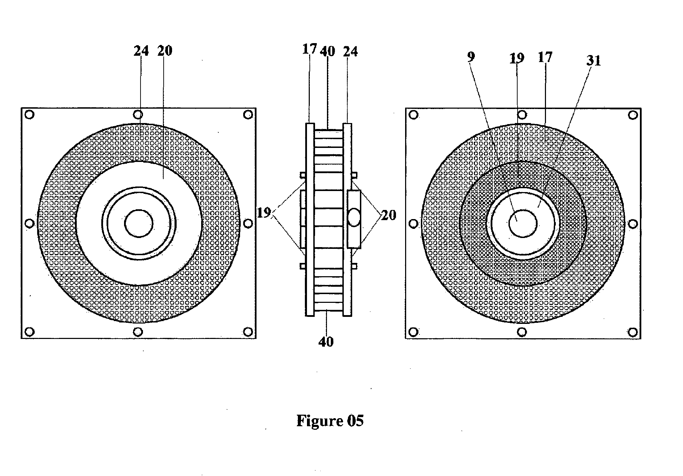

The various figures of the drawings represent each and every element of this patent. Unless the turbo compressor which is another figure 02, figure 01 forms a complement of all components unified: collector 1, turbine motor 4, heat exchanger tubes: inlets 24 and outlet 17 located at the path of hot gas outlet 8 turbine sensor output 3 to be long be approximately equal to six times the diameter of the duct, last impeller sensor 12 which is the highest temperature that receive solar radiation; coating ceramic heat-storing 13; outlet holes 19 in the inner face of the gases used and leaving the turbine motor 4 and the fins cooling turbine 21 in the motor 4, the cooling air that reaches the fins 22 of the compressor 16. The compressor 16 compresses air and directs it to 24, inlet air to the tubes 24 which make heat exchanger to be heated by the air on the way to the outlet 8, the air entering the compressor 16 through the inlet 24 out its output tubes 17 which are directed to the sensor 1 18 channels is protected by an insulator 23 from the outside air. The air compressed by the compressor 16, heated by the tubes 40 (of Figure 05) that make heat exchanger inlet 24 and outlet 17 and in turn by the heating of the blind wall 20, it arrives at the entrance 18 6 of sensor 1. The sensor 1 is irradiated by solar radiation reflected by a parabola or heliostats, depending on the power applied to the network generator 10, which is attached to the main shaft 9, which connects to the turbine motor 4 with the compressor 16 and the generator 10. The compressed air and irradiated latter reaches its conduits 12 and out the outlet 3 of the sensor 1 by pressing and operating the turbine motor 4 which drives the compressor 16 and the generator 10. All sensor 1, from the outside inwards has an insulator 23 and a buffer under the thermal insulating powder or ceramic balls 13 in order to avoid fluctuations in flow that fills the inside from the inlet 6 to the transducer 1 to the output 3.
Figure 02 shows the same circuit but in this case the turbine 4 and the compressor 16 have been supplied by a turbocharger: with the compressor 16 to the air intake 27 or compresses it by 18 directs it to the exchanger 24 and again heated by leads 18 to the input transducer 1. The sunlight radiated by a parable or some heliostats aimed at capturing one after being overheated in their ducts comes three leading you through the turbine 4 sale and heating at 24 and exits through 8. The insulation and temperature accumulator 13 saves on the outside temperature and in turn builds up to the temperature variations of the radiation. All this kinetic energy the turbine 4 is transmitted through the shaft 9 to the compressor 16, the reducer 26 and the generator 10.

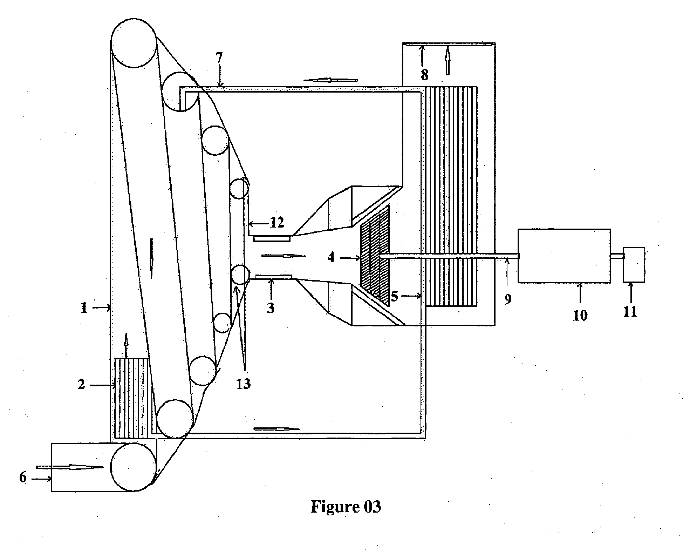

Figure 03 is a proposed model of this patent in which the compressor is a separate element and is set out. We sensor 1 through the inlet 6 where it enters the compressed air coming from an external compressor, the air passes through a heat exchanger 2 and passes into the collector duct 1 which, like the other figures taking a radial with termination of their ducts in a cone. The last turn 12 of the sensor 1 on the discharge duct 3 having fins anti discharge flow turbulence and high pressure and high temperature on the turbine motor 4. The gases in the output path 8 passing through a heat exchanger 5 which sends the captured heat in the fluid circulating through the conduit 7 and preferably within the sensor 1 to prevent heat loss and sends it to the exchanger 2 through inlet sensor 1. The turbine motor shaft 4 through 9 exerts its kinetic force onto the compressor 10 and is connected by the starter clutch 11.

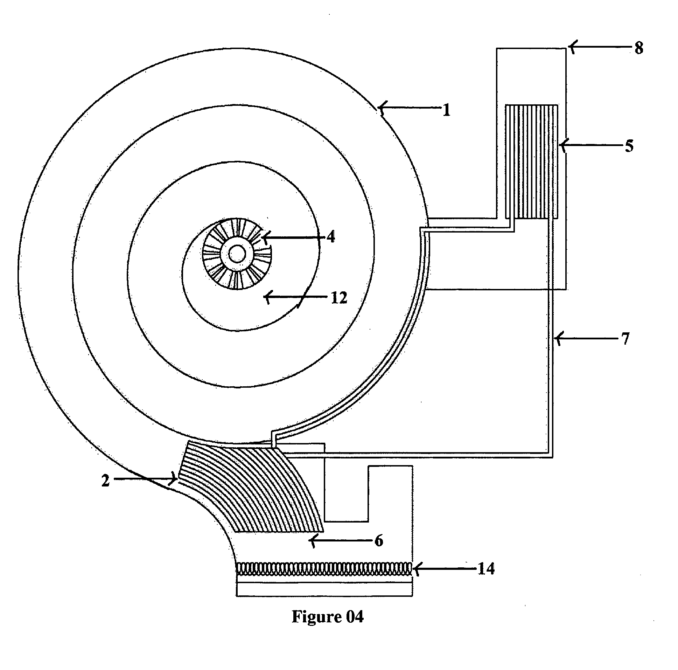

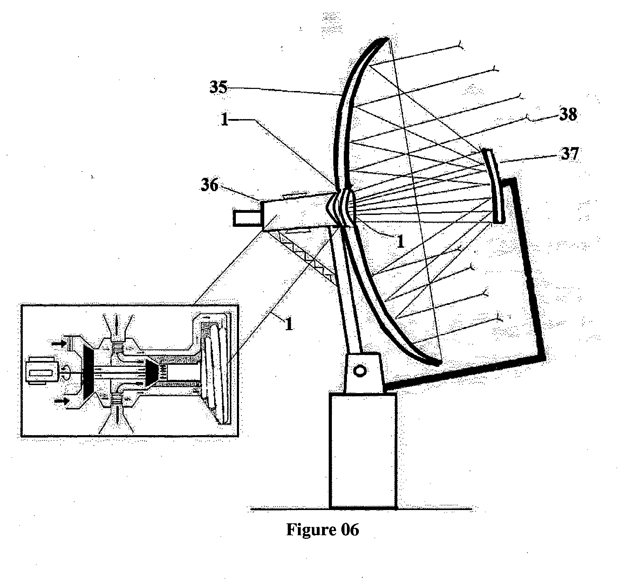

Figure 04 shows the one seen from the front sensor which appreciates it's radially and the last line, the innermost 12 and shown, even if it would not be visible in this light, the turbine motor 4. Here can be seen the radiator 2 to the inlet 6 of the collector 1 and the figurative screw compressor 14, the gas outlet 8, the heat exchanger 5 in the path of the exhaust duct 7 and on the outside and inside the sensor 1. Figure 05 shows, in the center, the heat exchanger tubes 40 and the faces 24 and 17. By the sides 24 and 27 where 24 shows that the center is the part which is blind to the compressor is outside the holes which gives the tubes 40 which to leave the face 17 and direct the compressed air input to the sensor 1 of Figure 01. For the conduits 18. In the face 17 is seen that the outer holes are output tubes that carry air from the compressor 16 of Figure 01 to the sensor 1, likewise be appreciated the holes 19 which pass gases from the turbine motor 4 the output path 8, both can be seen in Figure 01, through the tubes 40. Figure 06 allows us to see another way of how to install the sensor assembly 36 one with all that is part of the patent as set 01 or 02. Figure 06 shows the assembly 36 installed in the center of the parable, but at the back. Solar irradiation is divided by 38 and the parable focuses on a reflector 37 which directs that concentration to the center of the parable where the sensor 1. It is also possible to place the full complement of the gauge and other accessories in the direct focus of the parabola, as Figure 06 is only a figurative form of one of the possibilities for installation in a parable

### DESCRIPTION OF A PREFERRED EMBODIMENT

A preferred embodiment, in the case of this double project (embedded or external compressor to the turbine shaft, with parabola or tower) may be two: installed in a solar tower of sufficient height where the radiation heliostats in its projection not overshadow, or small-scale, with the collector to focus irradiation of a parabola. In the first case is required to perform a civil work at a certain height to house a platform for supporting generator, turbine and sensor. The sensor has to be done with tubes of a few millimeters of material section and either square or circular, high thermal transmissibility and high thermal resistance at high temperatures and that has the lowest expansion alloy, all to have the better transmission of heat from solar radiation where the material will circulate fluid; in this project the fluid is air, and to form a radial shape with a spiral conformation of its cone shape, where each turn is behind, but in view of the radiation and decreasing the diameter of each turn until the outflow where the output would be coupled to the turbine inlet conduit and another motor would be input to the sensor, in the first round, that is to communicate with the compressor outlet. The cone will have a tilt sensor in which the radial portion is directed towards the heliostat so that the highest point of solar incidence is the last round that matches the turbine sensor communication. This will make the first round outer radial sensor reaches a high temperature, and that increases in each round as it approaches the exit where shrinks and where temperatures can reach up to 1200 C °. When the turbine sensor join up either a turbocharger or supercharger this turbine will be as stated in the description of the invention: ready to receive air flow heated by solar radiation and with the compressed air duct to be connected to the input of the sensor, if any incorporates the compressor turbine in the case of the turbocharger the compressor is implied herein. The gas output goes directly to the exit of the tower that supports the plant, which in principle would ideally it was hollow so that the hot gases, clean air, originate, rising temperature differential, air circulation will cool all its components. At the outlet of the turbine motor, after passing the air between the tubes through which the compressed airflow from the compressor to the sensor, in order to exploit waste hot air, it will be used to be used by heat exchangers air/fluid oils, salts etc. to store or produce, in situ, to produce heat energy in the hours of sunlight no or generate hydrogen by steam and use some of the electricity generated in the high peaks of solar isolation in which the energy provided by the sun is high. The irradiation will by heliostats, for tower installation, preferably those which can give focus individually.

Another preferred embodiment is using the same components as in the installation of the tower, is at a much smaller scale in which the elements will be installed in a parabola in which the sensor will be in the focal point of increased incidence of solar radiation and after him the mini turbine and generator DC or AC. Given the size, the diameter of a parabola, which is required for more than 15 kW, although can reach other sizes, we advise that preferably more suitable facility is preferred tower, when the electric power is required to exceed fifteen kilowatts commented.

## Claims

1. : A solar collector and turbine arrangement comprising:
a collector (1) for receiving solar radiation;
a motor turbine (4); and
a compressor (16); wherein:
said collector is a radial collector (1) of conical configuration having a conduit, the interior of which being of circular or square cross section, the conduit having a path following the conical form of the collector and forming a plurality of volutes or turnings; the conduit being arranged so that there is no gap between adjacent volutes or turnings of the conduit, the radially innermost volute or turning of the conduit being connected with a the conduit (3) feeding the motor turbine (4), the radial collector having an inlet (6) for compressed air from the compressor (16);
the radial collector is protected by a cover which has an insutating layer (23) covering ducts (18) leading from the compressor (16) to the collector (1), wherein within the insulating layer (23) there is a layer of ceramic (13) which is solid, in powder form or in pieces and which stores heat;
said collector (1) further comprising nozzles (30) for generating heat energy by means of gas injection which produces flame and adds heat to the air coming from the compressor (16);
the motor turbine (4) is fed with flow heated by solar radiation in the collector (1) or other types of fuel, wherein the motor turbine (4) is adapted to the collector (1) but independent from the latter, the motor turbine (4) being connected to a shaft (9) linking the compressor (16) and an alternator or generator (10);
the arrangement comprises a heat exchanger which separates the motor turbine (4) from the compressor (16), wherein the heat exchanger has two faces connected by tubes (40) respectively having an air outlet (17) and an air inlet (24), wherein these two faces have holes and a blind wall (20) that shuts off the air from the compressor and forces it to be led to the duct (18) through the tubes (40) from the inlets (24) to the outlets (17) thereof without contacting the area of the motor turbine (4);
the arrangement has an intermediate zone that divides the compressor (16) from the motor turbine (4), wherein holes (19) are present on the face of the heat exchanger which is in the motor turbine area at an inside diameter thereof, through said holes (19) gas having passed through the motor turbine (4) flows in a direction to an outlet (8) and is cut off from the compressor area by the blind wall (20) and also from the heated air passing through the tubes (40) from the inlets (24) to the outlets (17) thereof;
the compressor (16) is configured to send the compressed air through the inlets (24) and unpressurised air to the motor turbine (4) by means of fins (22) which form part of the central part of the compressor (16); and
a central passage is arranged in the intermediate zone, wherein the central passage communicates and passes along the shaft (9) between a chamber forming a duct (31), the duct being airtight except for the compressor (16) sending ambient air by means of the fins (22) towards the blades of the motor turbine (4), central fins (21) of the motor turbine (4) sending the air outside, where it mixes with air going to the outlet (8).

2. : The solar collector and turbine arrangement according to claim 1 wherein:
the collector (1) for receiving solar radiation receives solar radiation from a parabola or heliostats, if installed in a tower;
the motor turbine (4) and compressor (16) are configured as a turbocharger; and
a gearbox (26) is mounted on the shaft (9) between the generator and the motor turbine (4).

## Patentansprüche

1. Eine Einheit Solarkollektoren und eine Turbine umfassend aus:
einem Kollektor (1) für den Empfang von Sonnenstrahlung;
einer motorisierten Turbine (4); und
einem Kompressor (16); **dadurch gekennzeichnet, dass**:
der Kollektor ein Radialkollektor (1) in Form eines Kegels ist, der einen Kanal beinhaltet, dessen Inneres einen kreisförmigen oder quadratischen Querschnitt aufweist, der Kanal hat einen Durchlauf, der der Kegelform des Kollektors entspricht und der eine Vielzahl von Spiralen oder Windungen bildet; der Kanal ist so ausgelegt, dass es keine Lücken zwischen den anliegenden Spiralen oder Windungen im Kanal gibt, die innerste Spirale bzw. Windung ist mit dem Kanal (3) verbunden und betreibt die motorisierte Turbine (4), der Radialkollektor hat einen Zugang (6) für die komprimierte Luft des Kompressors (16);
der Radialkollektor durch ein Gehäuse geschützt ist, das eine Isolierschicht (23) besitzt, die die Kanäle (18) bedeckt, die vom Kompressor (16) zum Kollektor (1) führen, in der Isolierschicht (23) gibt es eine Keramikschicht (13), die fest oder pulverförmig ist oder aus Teilen besteht und die Wärme speichert;
der Kollektor (1) auch Düsen (30) besitzt für die Erzeugung von Wärmeenergie mittels Einspritzen von Gas, wodurch eine Flamme entsteht und der Luft, die aus Richtung des Kompressors (16) strömt, Wärme zugeführt wird.
die motorisierte Turbine (4) ihre Energie durch die mittels Sonnenstrahlung erwärmte Strömung vom Kollektor (1) oder durch andere Brennstoffe erhält, womit die motorisierte Turbine (4) an den Kollektor (1) angepasst ist, unabhängig davon ist die motorisierte Turbine (4) mit einer Achse (9) verbunden, die den Kompressor (16) mit einem Wechselrichter oder Generator (10) verbindet;
die Einheit einen Wärmeübertrager beinhaltet, der die motorisierte Turbine (4) vom Kompressor (16) trennt, der Wärmeübertrager hat zwei durch Leitungen (40) verbundene Abschnitte, die jeweils einen Luftauslass (17) und Lufteinlass (24) haben, beide Abschnitte haben Öffnungen und eine blinde Wand (20), die die Luftzufuhr aus dem Kompressor kappt und sie dadurch zum Kanal (18) durch die Leitung (40) führt, von den Lufteinlässen (24) zu den Luftauslässen (17), folglich ohne den Bereich der motorisierten Turbine (4) zu berühren;
die Einheit einen Zwischenbereich hat, der den Kompressor (16) von der motorisierten Turbine (4) trennt, wo sich Öffnungen (19) auf der Seite des Wärmeübertragers befinden, der sich in dem Bereich der motorisierten Turbine (4) in einem inneren Durchmesser desselben befindet; durch diese Öffnungen (19) strömt das Gas, welches den Bereich der motorisierten Turbine (4) passiert hat, in Richtung eines Auslasses (8) und wird im Druckbereich durch die blinde Wand (20) unterbrochen und auch durch die erwärmte Luft, die durch die Leitung (40) von den Einlässen (24) zu den Auslässen (17) strömt;
der Kompressor (16) ist so eingestellt, dass er die komprimierte Luft zu den Einlässen (24) und die nicht unter Druck stehende Luft mittels Schaufeln (22) zur motorisierten Turbine (4) führt, die einen Teil des Kernstücks des Kompressors (16) darstellen; der Zwischenbereich verfügt auch über einen Gang, wo dieser überträgt und entlang der Achse (9) zwischen einer Kammer, die einen Kanal (31) bildet, führt, der Kanal ist luftdicht außer für den Kompressor (16), der die Umgebungsluft mittels Schaufeln (22) zu den Propellerblättern der motorisierten Turbine (4) schickt, die mittleren Schaufeln (21) der motorisierten Turbine (4) drücken die Luft hinaus, wo sie sich mit der Luft mischt, die zu den Auslässen (8) strömt.

2. Eine Einheit aus motorisierter Turbine und Solarkollektor gemäß Anspruch 1, **dadurch gekennzeichnet, dass**:
der Kollektor für die Aufnahme von Sonnenstrahlung die Sonnenstrahlung durch einen Reflektor oder einen Heliostat erhält, wenn dieser auf einem Turm aufgestellt wird;
die motorisierte Turbine und der Kompressor wie ein Turbolader eingestellt sind; und ein Kraftübertragungsgehäuse (26) zwischen dem Generator und der motorisierten Turbine (4)

## Revendications

1. Un ensemble de capteur solaire et turbine qui comprend :
un capteur (1) pour la réception du rayonnement solaire;
une turbine motorisée (4); et
un compresseur (16); pour lequel :
ledit capteur est un capteur à champ radial (1) de configuration conique qui contient un conduit, dont l'intérieur est de section transversale circulaire ou carrée, le conduit a un tracé qui suit la forme conique du capteur et qui forme une pluralité de spirales ou courbes; le conduit a été conçu de façon à ne pas avoir de brèche entre les spirales ou les courbes adjacentes au conduit, la volute ou courbe radialement plus interne du conduit est connectée au conduit (3) et alimente la turbine motorisée (4), le capteur à champ radial possède une entrée (6) pour l'air comprimé du compresseur (16);
le capteur à champ radial est protégé par un boîtier doté d'une couche (23) isolante qui recouvre les conduits (18) allant du compresseur (16) au capteur (1), où, à l'intérieur de la couche isolante (23), se trouve une couche de céramique (13) solide sous forme de poudre ou pièces et qui stocke la chaleur;
ledit capteur (1) contient également des embouts (30) pour générer l'énergie thermique à travers l'injection de gaz ce qui produit une flamme et apporte de la chaleur supplémentaire à l'air provenant du compresseur (16);
la turbine motorisée (4) est alimentée par le flux chauffé par rayonnement solaire du capteur (1) ou autres types de combustible, la turbine motorisée (4) étant adaptée au capteur (1) bien que, indépendante de ce dernier la turbine motorisée (4) est connectée à un essieu (9) qui relie le compresseur (16) à un alternateur ou générateur (10);
l'ensemble inclut un échangeur de chaleur qui sépare la turbine motorisée (4) du compresseur (16), où l'échangeur de chaleur possède deux phases connectées par des tuyaux (40) qui possèdent, respectivement, une sortie d'air (17) et une entrée d'air (24), les deux phases sont dotées d'orifices et d'un mur aveugle (20) qui bloque le passage d'air provenant du compresseur et le force pour le conduire au conduit (18) à travers le tuyau (40) depuis les entrées (24) jusqu'aux sorties (17) par conséquent sans entrer en contact avec la zone de la turbine motorisée (4);
l'ensemble possède une zone intermédiaire qui sépare le compresseur (16) de la turbine motorisée (4), où se trouvent des orifices (19) sur le côté de l'échangeur de chaleur situé dans la zone de la turbine motorisée (4) dans un diamètre interne de celui-ci ; à travers lesdits orifices (19), le gaz qui est passé par la turbine motorisée (4) flue vers une sortie (8) et est séparé dans la zone de compression du mur aveugle (20), ainsi que de l'air chauffé qui passe par le tuyau (40) depuis les entrées (24) jusqu'aux sorties (17) de celle-ci;
le compresseur (16) est configuré pour envoyer l'air comprimé aux entrées (24) et l'air non pressurisé à la turbine motorisée (4) à travers des ailettes (22) situées sur la partie centrale du compresseur (16); et dispose d'un couloir central dans la zone intermédiaire, où ce couloir central communique et passe le long de l'essieu (9) entre une chambre qui forme un conduit (31), conduit qui est étanche à l'air excepté pour le compresseur (16) et envoie l'air ambiant à travers les ailettes (22) aux palettes de la turbine motorisée (4), les ailettes centrales (21) de la turbine motorisée (4) envoient l'air vers l'extérieur, où il se mélange à l'air qui va vers la sortie (8).

2. Un ensemble de turbine motorisée et capteur solaire selon la revendication 1 pour lequel :
le capteur reçoit le rayonnement solaire d'une parabole un ou héliostat, s'il est installé sur une tour;
la turbine motorisée et le compresseur sont configurés comme un turbocompresseur; et une boîte de transfert (26) est montée entre le générateur et la turbine motorisée (4).
